(19) **Europäisches Patentamt / European Patent Office / Office européen des brevets**

(11) **EP 1 058 231 B1**

(12) **EUROPEAN PATENT SPECIFICATION**

(45) Date of publication and mention
of the grant of the patent:
**09.05.2012 Bulletin 2012/19**

(51) Int Cl.:
***G09G 3/36*** (2006.01)

(21) Application number: **00111643.3**

(22) Date of filing: **31.05.2000**

(54) **TFT-LCD using multi-phase charge sharing and method for driving the same**

Dünnfilmtransistor-Flüssigkristall-Anzeige mit gemeinsamer Mehrphasenladungsbenutzung und Steuerverfahren dafür

Dispositif d'affichage à cristal liquide à matrice active à transistor à couche mince utilisant partage de charge à phases multiples et sa méthode de commande

(84) Designated Contracting States:
**AT BE CH CY DE DK ES FI FR GB GR IE IT LI LU MC NL PT SE**

(30) Priority: **03.06.1999 KR 9920469**

(43) Date of publication of application:
**06.12.2000 Bulletin 2000/49**

(73) Proprietor: **Samsung Electronics Co., Ltd.**
**Yeongtong-gu**
**Suwon-si, Gyeonggi-do (KR)**

(72) Inventor: **Kwon, Oh-kyong**
**Seoul, 138-240 (KR)**

(74) Representative: **Mounteney, Simon James**
**Marks & Clerk LLP**
**90 Long Acre**
**London**
**WC2E 9RA (GB)**

(56) References cited:
**WO-A-99/12072      GB-A- 2 324 191**
**US-A- 5 528 256**

- **PATENT ABSTRACTS OF JAPAN vol. 1998, no. 10, 31 August 1998 (1998-08-31) -& JP 10 133174 A (SONY CORP), 22 May 1998 (1998-05-22)**
- **PATENT ABSTRACTS OF JAPAN vol. 1998, no. 13, 30 November 1998 (1998-11-30) -& JP 10 222130 A (TOSHIBA CORP), 21 August 1998 (1998-08-21)**

**Description**

BACKGROUND OF THE INVENTION

Field of the Invention

The present invention relates to a thin film transistor-liquid crystal display (TFT-LCD) and, more particularly, to a TFT-LCD using multi-phase charge sharing and a method for driving the same, in which source lines of the liquid crystal panel are driven with a low power through charge sharing, to reduce the consumption power of a TFT-LCD driving circuit.

Discussion of Related Art

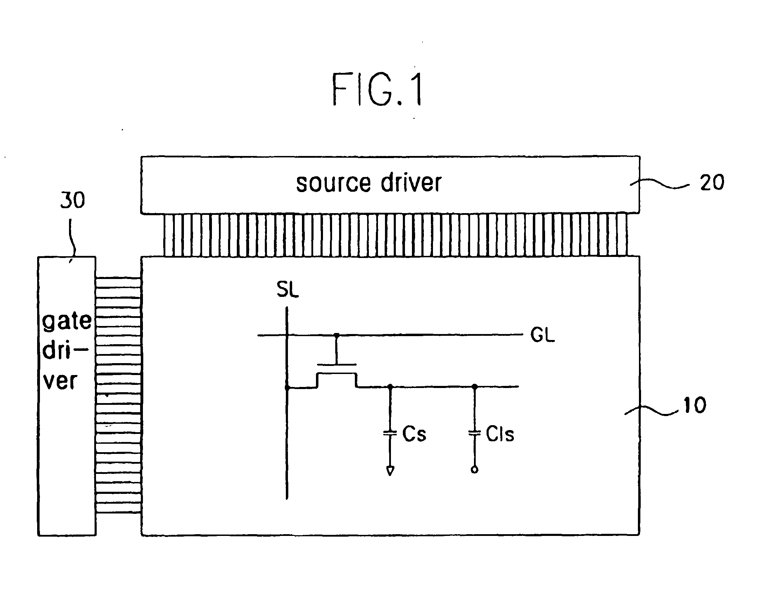

In general, a TFT-LCD is being widely used as a screen for a desk-top computer, TV, computer's monitor because it has the most excellent properties in a variety of LCDs, such as high image quality similar to that of CRT, high-speed response and so on. A conventional TFT-LCD, as shown in FIG. 1, includes a liquid crystal panel 10 having a plurality of pixels each of which is located at the point where each of a plurality of gate lines GL intersects each of a plurality of source lines SL, a source driver 20 for supplying a video signal to each of the pixels through a corresponding source line SL of the liquid crystal panel 10, and a gate driver 30 for selecting a gate line GL of the liquid crystal panel 10 to turn on plural pixels. Each pixel consists of a thin film transistor 1 whose gate is connected to a corresponding gate line GL and whose drain is connected to a corresponding source line SL, and a storage capacitor Cs and a liquid crystal capacitor Clc which are connected to the source of the thin film transistor 1 in parallel.

The operation of the conventional TFT-LCD constructed as above is described below with reference to the attached drawings. A sampling register (not shown) of the source driver 20 sequentially receives video data items each of which corresponds to one pixel and stores them which correspond to the source lines SL, respectively. The video data items which are stored in the sampling register are transferred to the holding register by the signal of the controller. The gate driver 30 outputs a gate line selection signal GLS, to select a gate line GL among the plural gate lines GL. Accordingly, the plural thin film transistors connected to the selected gate line GL are turned on to allow the video data stored in the holding register of the source driver 20 to be applied to their drains, thereby displaying the video data on the liquid crystal panel 10.

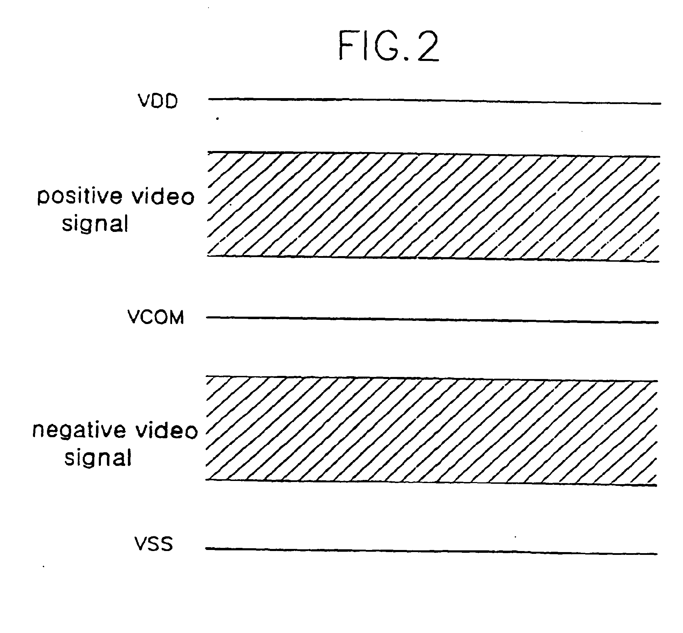

Here, the source driver 20 supplies VCOM, a positive video signal and a negative video signal to the liquid crystal panel 10, to thereby display the video data thereon. That is, in the operation of the convention TFT-LCD, as shown in FIG. 2, the positive video signal and the negative video signal are alternately supplied to the pixels whenever a frame changes in order not to directly apply DC voltage to the liquid crystal. For this, the intermediate voltage between the positive and negative video signals, VCOM, is applied to an electrode formed on an upper plate of the TFT-LCD. When the positive and negative video signals are alternately provided to the liquid crystal on the basis of VCOM, however, light transmission curves of the liquid crystal do not accord with each other, resulting in flicker.

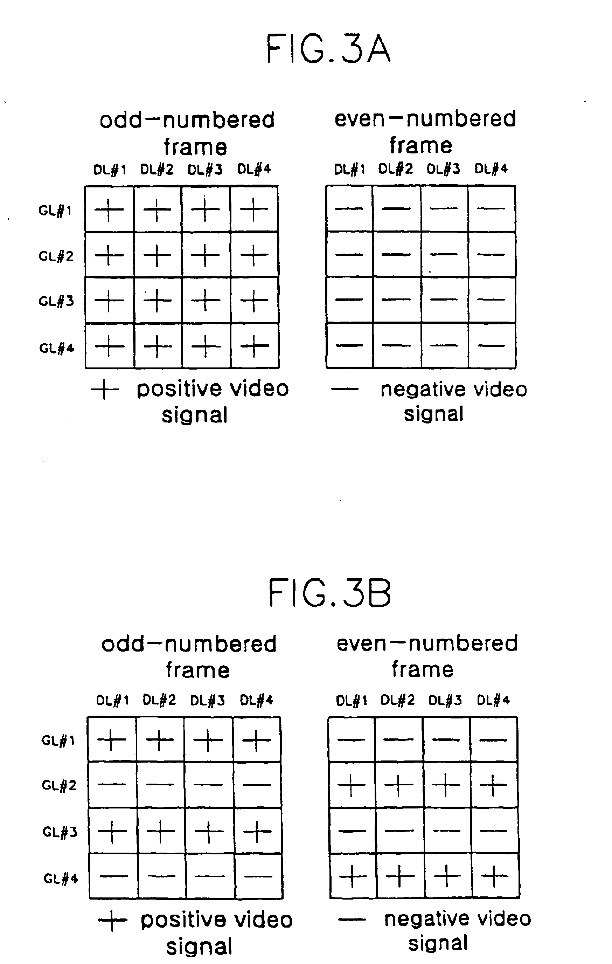

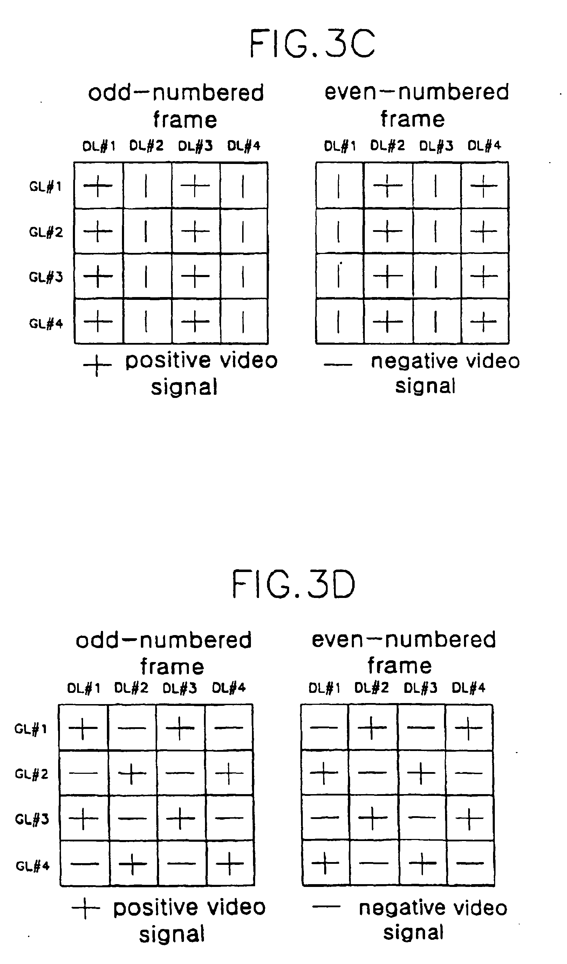

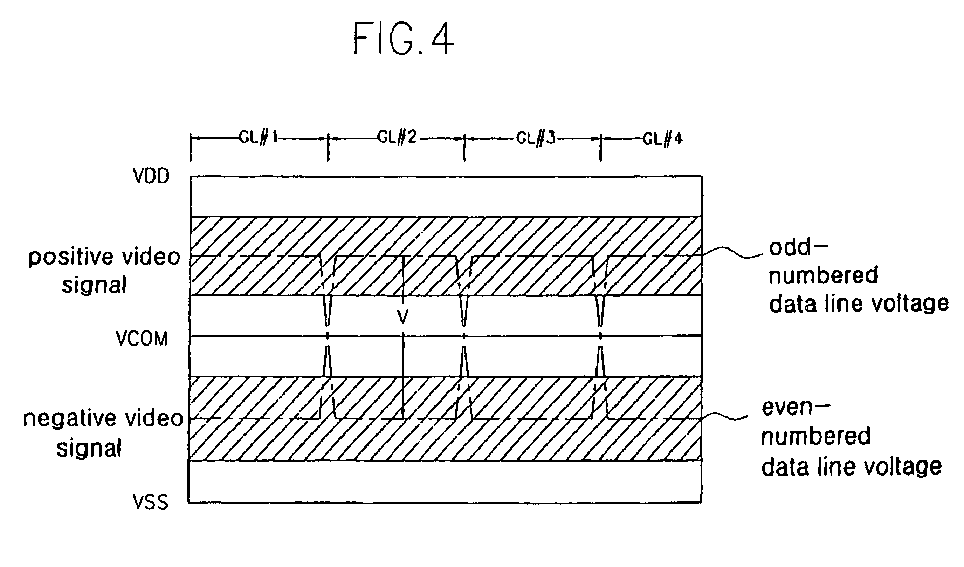

To reduce the generation of flicker, there is employed one of a frame inversion, line inversion, column inversion and dot inversion, shown in FIGS. 3A to 3D, respectively. The frame inversion of FIG. 3A is a mode that the polarity of the video signal is changed only when the frame is changed. The line inversion of FIG. 3B is a mode that the video signal's polarity is varied whenever the gate line GL changes. The column inversion shown in FIG. 3C converts the polarity of the video signal whenever the source line SL changes, and the dot inversion of FIG. 3D converts it whenever the source line SL, gate line GL and frame change. The image quality is satisfactory in the order of the frame inversion, line inversion, column inversion and dot inversion. A higher image quality requires higher power consumption because the number of the generation of polarity conversions increases in proportional to the image quality. This is explained below with reference to the dot inversion shown in FIG. 4.

FIG. 4 illustrates the waveforms of an odd-numbered source line SL and an even-number source line SL, applied to the liquid crystal panel 10, showing that the video signals of the source lines SL change their polarities on the basis of VCOM whenever the gate line GL changes. Here, when it is assumed that the entire TFT-LCD panel displays gray color, the video signal swing width V of the source lines SL is twice the sum of VCOM and the swing width of the positive video signal or the sum of VCOM and the swing width of the negative video signal. The consumed power at the output terminal of the TFT-LCD when the capacitance of the source line SL is $C_L$ is calculated by the following formula.

$$E = C_L \cdot V^2$$

That is, the dot inversion consumes a large amount of power because the video signal changes its polarity from (+) to (-) or from (-) to (+) on the basis of VCOM whenever the gate line GL changes.

Furthermore, the conventional TFT-LCD consumes a larger quantity of power to increase the generation of heat in case where its TFT is configured of a polysilicon TFT. Accordingly, the characteristic of the liquid crystal and the property of the TFT are deteriorated due to the heat generated. To solve this problem, there is proposed a method for driving the TFT-LCD in which, in order to supply a desired amount of voltage to the liquid crystal of each pixel, with the voltage of the common electrode being fixed, the source driver supplies both ends of the liquid crystal with a voltage higher than the common electrode voltage in the nth frame, and supplies them with a voltage lower than the common electrode voltage in the (n+1)th frame, the voltages, respectively applied to the pixels placed above the same column line and the pixels placed therebelow, having their polarities different from each other, and the voltages, respectively applied to the pixels placed at the left side of the same row line and the pixels located at the right side thereof, having their polarities different from each other even in the same nth frame.

This TFT-LCD is driven in such a manner that charge sharing is performed with charge sharing time set for every row line for charge sharing, and then a voltage corresponding to video data is applied to each pixel. Since the voltage polarity of odd-numbered pixels of the (M-1)th low line is different from that of even-numbered pixels thereof, odd-numbered source lines are connected to even-numbered source lines through a switching element before a desired amount of voltage corresponding to the video data is applied to the pixels of the Mth row line. By doing so, the source line to which the voltage higher than the common electrode voltage is applied to and the source line to which the voltage lower than the common electrode voltage is applied maintain the maximum voltage at the common electrode through charge sharing. With this charge sharing, the source driving circuit reduces the voltage swing width by half in comparison with that of the conventional circuit, decreasing the power consumed for driving the TFT-LCD. The conventional TFT-LCD using charge sharing, however, connects the odd-numbered source lines SL to the even-numbered source lines SL using a transfer gate for a period of blanking time, to move a part of the charges of the source lines charged with the positive video signal to the source lines charged with the negative video signal to allow them to share the charges. Accordingly, the consumption power is reduced by 50% at most. Furthermore, the conventional TFT-LCD requires a plurality of source drivers in order to realize a higher resolution of VGA class < SVGA class < XGA class < SXGA class < UXGA class. This narrows the line pitch, bring about reliability problems.

Document WO-A-9912072 discloses a TFT-LCD wherein a multi-phase charge sharing process is carried out, with use of at least one added capacitor, comprising both phases of charge/discharge of source line capacitances by connection to said at least one added capacitor and of charge sharing between odd-numbered source lines and even-numbered source lines; said process is symmetric for positive and negative voltages and for odd-numbered source lines and even-numbered source lines, and involves either the use of more than one capacitor or the loading of a single capacitor at a voltage which is half the positive to negative voltage swing.

Document US-A-5528256 discloses different charge sharing processes within TFT-LCDs, also with use of an added capacitor, wherein nevertheless charge sharing between odd-numbered and even-numbered source lines and charge/discharge of an added capacitor never occur together as different phases of a multi-phase charge sharing process.

Document GB-A-2324191 discloses a TFT-LCD with just single-phase charge sharing between odd-numbered and even-numbered source lines using short-circuiting switches between every other pair of source lines.

SUMMARY OF THE INVENTION

Accordingly, the present invention is directed to a TFT-LCD using multi-phase charge sharing and a method for driving the same that substantially obviates one or more of the problems due to limitations and disadvantages of the related art.

An object of the present invention is to provide a TFT-LCD using multi-phase charge sharing, which solves reliability problem between the source lines thereof due to addition of source drivers for realizing a high resolution, and reduces power consumption.

The present invention provides the method for driving the TFT-LCD using multi-phase charge sharing, whose consumption power is reduced much more than that of the conventional TFT-LCD using charge sharing.

To accomplish the object of the present invention, there are provided a TFT-LCD using multi-phase charge sharing and a method of driving a TFT-LCD using multi-phase charge sharing according to respectively independent claims 5 and 1.

It is to be understood that both the foregoing general description and the following detailed description are exemplary and explanatory of the invention as claimed.

BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the invention:

In the drawings:

FIG. 1 is a block diagram of a conventional TFT-LCD;
FIG. 2 shows the operation waveforms of FIG. 1;
FIGS. 3A to 3D show TFT-LCD inversion modes;
FIG. 4 shows the output waveforms in dot inversion mode;
FIG. 5 is a block diagram of a TFT-LCD driving circuit according to the present invention;
FIG. 6 shows the input/output waveforms of signals of sections constructing the driving circuit of FIG. 5;
FIG. 7 is a block diagram of a TFT-LCD according to an embodiment of the present invention;
FIG. 8 is a block diagram of a TFT-LCD according to another embodiment of the present invention;
FIG. 9 shows the comparison between a voltage swing width and consumption power according to inputting of a video signal;
FIG. 10A shows a sharing voltage waveform when a black image is expressed;
FIG. 10B shows a sharing voltage waveform when a medium gray image is expressed;
FIG. 10C shows a sharing voltage waveform when a white image is expressed;
FIG. 11 shows a voltage waveform of an external capacitor when the black image is expressed; and
FIG. 12 is a graph showing consumption power reduction efficiency according to the present invention.

## DETAILED DESCRIPTION OF PREFERRED EMBODIMENT

Reference will now be made in detail to the preferred embodiments of the present invention, examples of which are illustrated in the accompanying drawings.

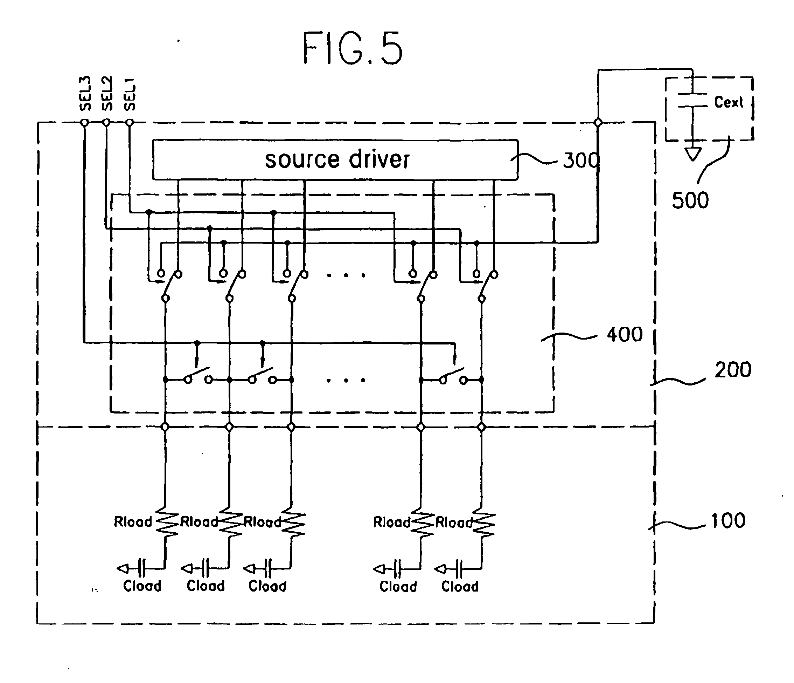

There will be described below a TFT-LCD using multi-phase charge sharing according to a preferred embodiment of the present invention with reference to the attached drawings. Referring to FIG. 5, the TFT-LCD using multi-phase charge sharing according to the present invention includes a line driver 200 which outputs video data signals each of which corresponds to each pixel through a plurality of source lines, a liquid crystal panel 100 for displaying the video signals applied through the source lines, and an external capacitor 500, connected between the line driver 200 and the liquid crystal panel 100, for collecting charges of source lines having a voltage higher than a common electrode voltage and supplying them to source lines having a voltage lower than the common electrode voltage when the source lines are connected thereto.

The line driver 200 includes a source driver 300 for supplying the pixels with video signals through the source lines of the liquid crystal panel 100, and a switching section 400 for connecting the source lines of the liquid crystal panel 100 to the source driver 300 or the external capacitor 500 according to an external driving signal. In the driving circuit of the TFT-LCD using multi-phase charge sharing, constructed as above, odd-numbered source lines are connected to output terminals of the source driver 300 or the external capacitor 500 according to a first selection signal SEL1. Similarly, even-numbered source lines are connected to output terminals of the source driver 300 or the external capacitor 500 according to a second selection signal SEL2.

Upon application of a third selection signal SEL3, all of the source lines of the TFT-LCD are connected to one another. Here, each source line has a capacitive load and a resistive load. In FIG. 5, a capacitance $C_{load}$ represents the source line's capacitor operating as the capacitive load, and a resistance $R_{load}$ represents the resistive load of the source line. The external capacitor $C_{ext}$ has capacitance much larger than the capacitance $C_{load}$, and it serves as an auxiliary power supply charging the capacitance $C_{load}$.

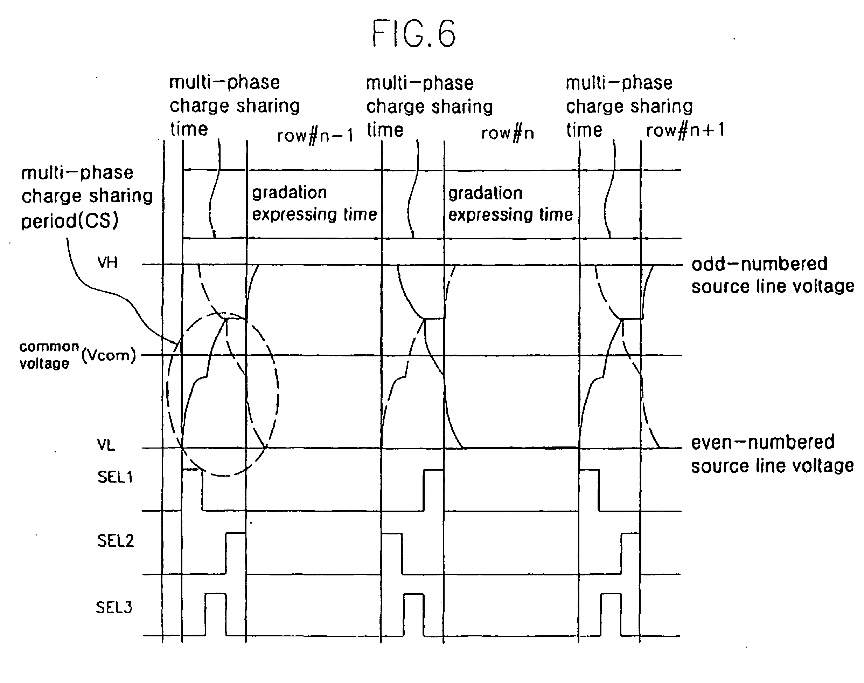

FIG. 6 shows the input/output waveforms of signals of sections constructing the driving circuit of the TFT-LCD according to the present invention, illustrating the selection signals applied to the line switching section 400 and a voltage whose charges are shared according to these selection signals. Let it be assumed that the number of the capacitive loads $C_{load}$ is M, the number of the capacitive loads charged with a voltage $V_H$ is M/2, and the number of the capacitive loads $C_{load}$ discharged with a voltage $V_L$ is M/2. Here, $V_H$ corresponds to a source line voltage having the positive polarity for expressing a multilevel image, and $V_L$ corresponds to an odd-numbered source line voltage having the negative polarity for expressing the same multilevel image.

In addition, let it be assumed that the odd-numbered capacitive loads $C_{load}$ have been charged with $V_H$ and the even-numbered capacitive loads $C_{load}$ have been discharged with $V_L$ after a lapse of the driving time of the (N-1)th capacitive loads $C_{load}$. Also, it is assumed that the odd-numbered capacitive loads $C_{load}$ are discharged with $V_L$ and the even-numbered capacitive loads $C_{load}$ are charged with $V_H$ during a period of the driving time of the Nth capacitive load. Furthermore, let it be assumed that the external capacitor $C_{ext}$ is considerably larger than the capacitive load $C_{load}$ and charged with a predetermined-level voltage to operate as a voltage source substantially. Here, the external capacitor $C_{ext}$ is charged with the voltage of $V_L + (1/3)$Vswing, as explained below, to serve as the voltage source even when the voltage is not externally applied thereto. The Vswing represents the difference between $V_H$ and $V_L$. In other words, the Vswing means the voltage swing width supplied by the conventional source driver in order to charge the capacitive load $C_{load}$ having $V_L$ with $V_H$. Moreover, let it be assumed that the output terminals of the source driver 300 are in a high impedance state during multi-phase charge sharing period. There will be explained below a method for driving the TFT-LCD using multi-phase charge sharing according to the present invention under the aforementioned conditions.

Referring to FIGS. 5 and 6, at the first charge sharing stage, upon application of the second selection signal SEL2 during a period of the Nth capacitive load driving time, i.e., the period of row line driving time, line switches of the line switching section 400, to which the second selection signal SEL2 is applied, are turned on. Accordingly, the even-numbered capacitive loads $C_{load}$ which have been discharged with $V_L$ during a period of the (N-1)th gradation expressing time are connected to the external capacitor $C_{ext}$ to accomplish charge balance through charge sharing, thereby being charged with the voltage $V_L$+(1/3)Vswing of the external capacitor $C_{ext}$.

Next, at the second charge sharing stage, the line switches to which the second selection signal SEL2 is applied are turned off and line switches with which the third selection signal SEL3 is provided are turned on. Accordingly, the odd-numbered capacitive loads $C_{load}$ which have been charged with $V_H$ during the period of the (N-1)th gradation expressing time are connected to the even-numbered capacitive loads $C_{load}$ charged with $V_L$+(1/3)Vswing at the first charge sharing stage, to allow all of the capacitive loads to have a voltage $V_L$+(2/3)Vswing higher than the $V_L$+(1/2)Vswing.

Subsequently, at the third charge sharing stage, the line switches to which the third selection signal SEL3 is applied are turned off and line switches with which the first selection signal SEL1 is provided are turned on. Accordingly, the odd-numbered capacitive loads $C_{load}$ which should be discharged with $V_L$ during a period of the Nth gradation expressing time are connected to the external capacitor $C_{ext}$ to share charges. At this time, the capacitive loads $C_{load}$ have the voltage of $V_L$+(1/3)Vswing of the external capacitor $C_{ext}$. After this, the line switches to which the first selection signal SEL1 is applied are turned off, completing the multi-phase charge sharing.

Upon completion of the Nth multi-phase charge sharing, the odd-numbered capacitive loads $C_{load}$ become the voltage of $V_L$+(1/3)Vswing and the even-numbered capacitive loads $C_{load}$ become the voltage of $V_L$+(2/3)Vswing. Subsequently, the output driver of the liquid crystal panel 100 charges the even-numbered capacitive loads $C_{load}$ having the $V_L$+(2/3)Vswing with $V_H$, and discharges the odd-numbered capacitive loads $C_{load}$ with $V_L$ during a period of gradation expressing time. Meantime, during a period of the (N+1)th capacitive load driving time, switching of the line switches coupled to the first and second selection signals SEL1 and SEL2 is performed in the order reverse to that carried out during a period of the Nth capacitive load driving time because the odd-numbered capacitive loads and the even-numbered capacitive loads should be charged and discharged with voltages opposite to those in case of the Nth capacitive load driving time.

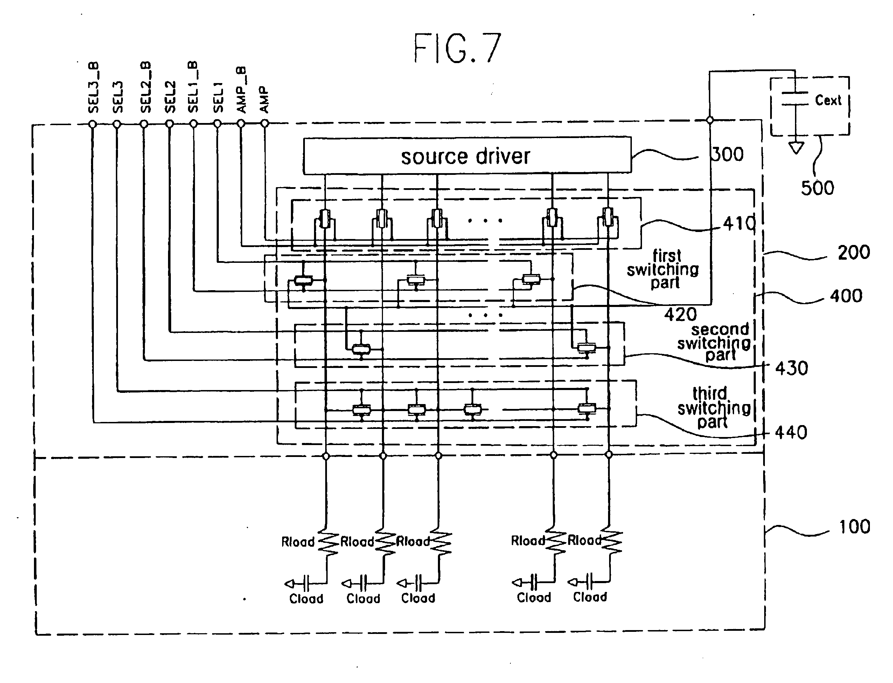

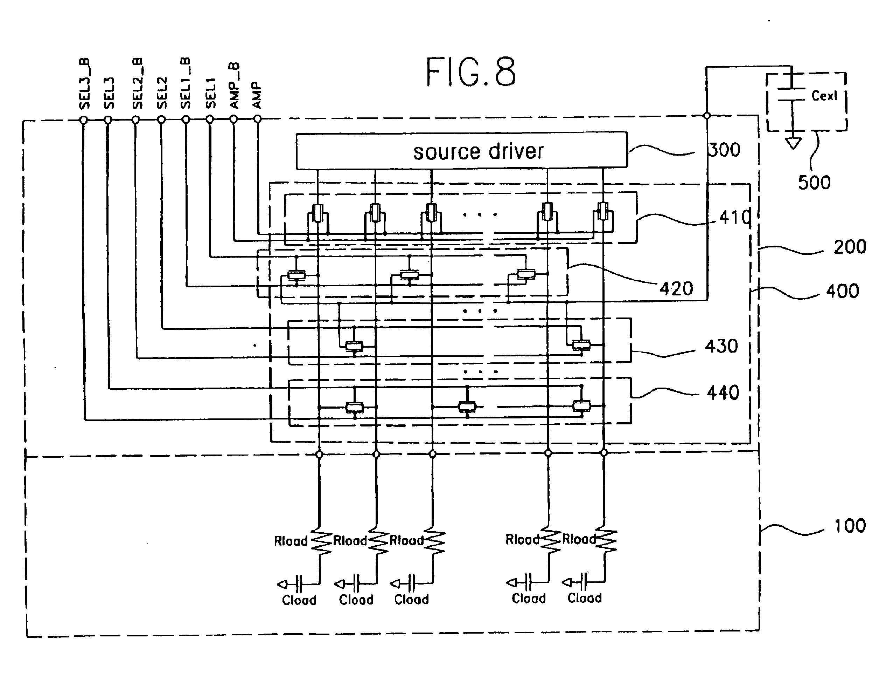

FIG. 7 is a block diagram of a TFT-LCD driving circuit according to an embodiment of the present invention, and FIG. 8 is a block diagram of a TFT-LCD driving circuit according to another embodiment of the present invention. Referring to FIG. 7, the TFT-LCD driving circuit according to the present invention is identical to the TFT-LCD driving circuit of FIG. 5 in the basic configuration and has a difference from that in that the line switching section 400 is configured of transfer gates. The TFT-LCD driving circuit of this embodiment performs multi-phase charge sharing operation as described above. Here, the line switching section 400 may be configured of PMOS transistors or NMOS transistors other than the transfer gates. The detailed configuration of the line switching section will be explained below.

The line switching section 400 includes a transfer gate part 410 for making the output terminals of the source driver 300 be in the high impedance state according to control signals AMP and AMP_B, first and second switching parts 420 and 430 for connecting each source line of the liquid crystal panel 100 to the external capacitor 500 according to the first and second selection signals SEL1 and SEL2, respectively, and a third switching part 440 connected to the source lines adjacent to the liquid crystal panel 100 according to the third selection signal SEL3. Here, the third switching part 440 is configured of transfer gates each of which is connected to each of the source lines adjacent to the liquid crystal panel.

Referring to FIG. 8, each of switches constructing the third switching part 440 is connected to the (2N-1)th and 2Nth source lines. That is, each of the transfer gates constructing the third switching part 440 is connected only between the (2N-1)th and 2Nth source lines, but is not connected between the 2Nth and (2N+1)th source lines. With this configuration, although the pixel voltage is locally varied after the two charge sharing steps in case where different video data signal are applied from the row lines to the LCD depending on the locations of the pixels, there is not a considerable difference in the total LCD consumption power. The consumption power of the TFT-LCD can be obtained using the following formula.

$$P_{av} = V_{DD} \cdot I_{av}$$

$$= V_{DD} \cdot [M \cdot C_L \cdot V_{swing} \cdot (freq/2)]$$

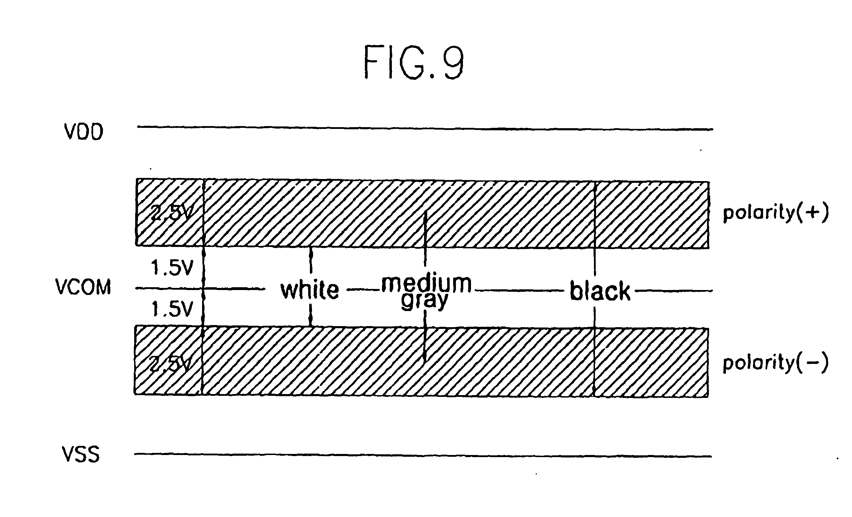

where M represents the number of the capacitive loads, $V_{DD}$ represents the supply power, Vswing indicates the width of a voltage charging and discharging the capacitive load, $C_L$ indicates the capacitive load, and freq represents a driving frequency when the capacitive loads are charged or discharged. Here, the voltage width Vswing deciding a consumption power index is determined by waveforms shown in FIG. 9. Although the Vswing became (1/2)Vswing after charge sharing in the conventional driving method according to the aforementioned formula, it was confirmed through HSPICE that the Vswing is reduced to (1/3)Vswing maximum through the multi-phase charge sharing in the present invention.

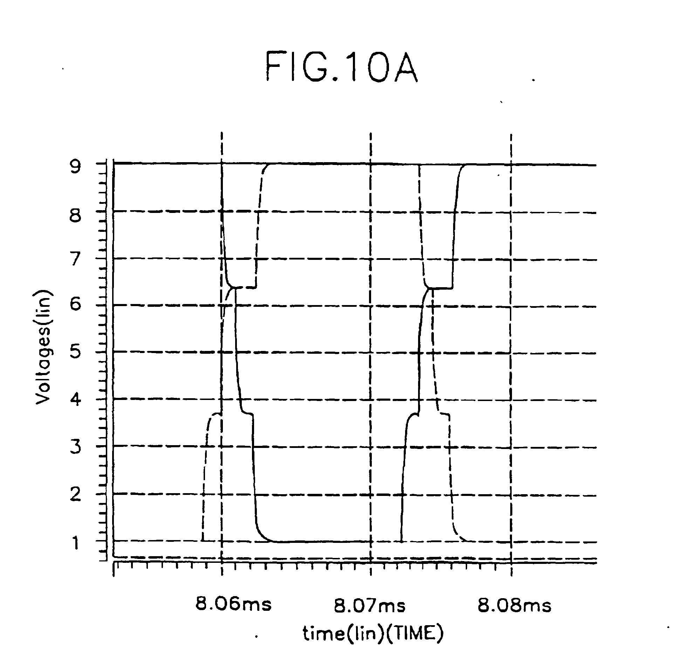

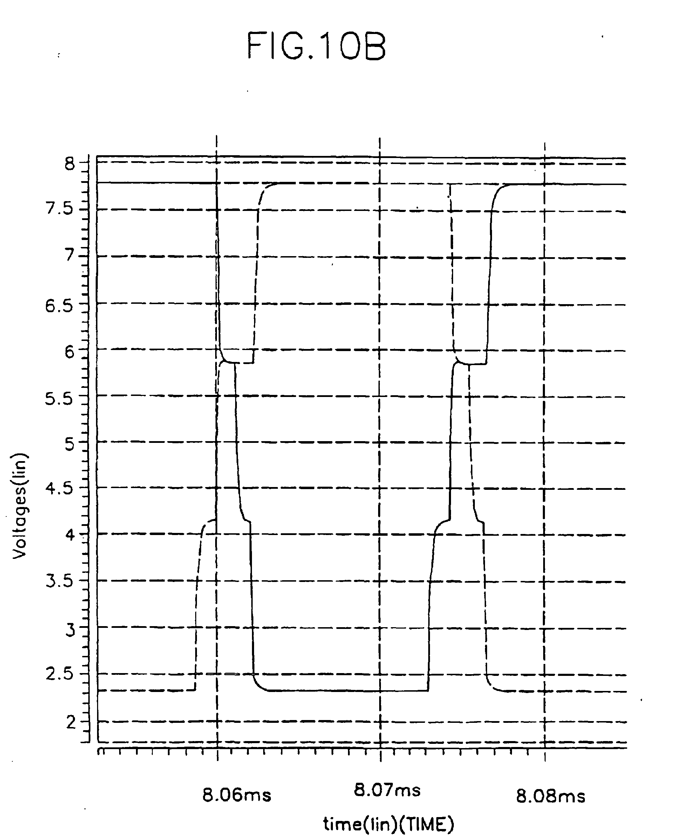

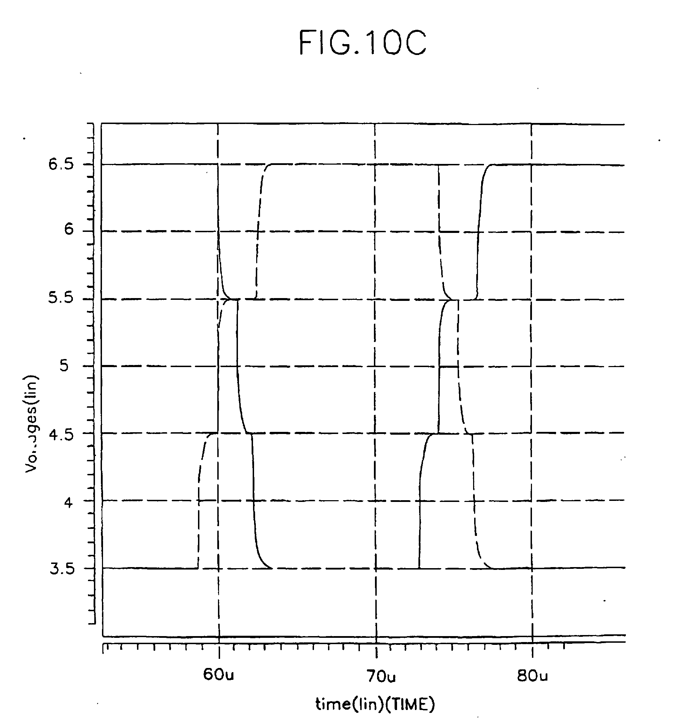

Referring to FIG. 9, in the voltage swing width according to inputting of video signals, the voltage swing width for expressing white is the narrowest. This corresponds to "normally white" that light is transmitted through the liquid crystal without application of voltage. FIG. 10C shows the waveforms of sharing voltage when a white image is expressed. Furthermore, the voltage swing width of the medium gray is a little wider than that of white, and the voltage swing width in case of black is the widest. FIGS. 10A and 10B show the waveforms of sharing voltages when the black and medium gray images are expressed, respectively.

Referring to FIGS. 10A, 10B and 10C, the voltage of the capacitive load after the multi-phase charge sharing obtains the same characteristic whether it is initially charged or not. In the FIGS. 10A, 10B and 10C, the voltage width Vswing is reduced to (1/3)Vswing in comparison with the conventional one, reaching a consumption power reduction efficiency of 66.6% under a predetermined simulation condition. Here, the consumption power reduction efficiency can be varied with RC time constants of the source lines and the length of charge sharing time of the source lines.

The external capacitor can be initially charged with the voltage $V_L$+(1/3)Vswing or more, and, even if it is not charged, charged with $V_L$+(1/3)Vswing according to the driving method proposed by the present invention, to substantially operate as a voltage source. Accordingly, it can be confirmed through the HSPICE simulation shown in FIGS. 10A, 10B and 10C that the TFT-LCD of the present invention increases more its consumption power reduction efficiency as the magnitude of the resistive load of the source lines decreases or the charge sharing time thereof increases.

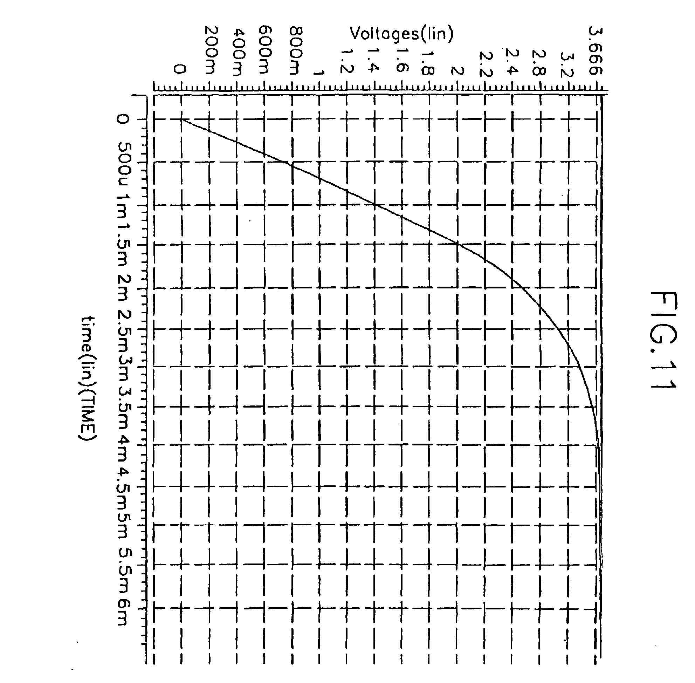

FIG. 11 shows the voltage waveform of the external capacitance $C_{ext}$ when the black image is expressed according to the driving method of the present invention, being confirmed through the HSPICE simulation. Referring to FIG. 11, the external capacitance is charged while the TFT-LCD is driven even if it has not been initially charged, to operate as a voltage source. The voltage of the external capacitance, confirmed through the simulation, becomes 3.666V after a lapse of predetermined time. At this time, though the voltage of the external capacitance depends on video signals, there is no variation in the average consumption power reduction efficiency.

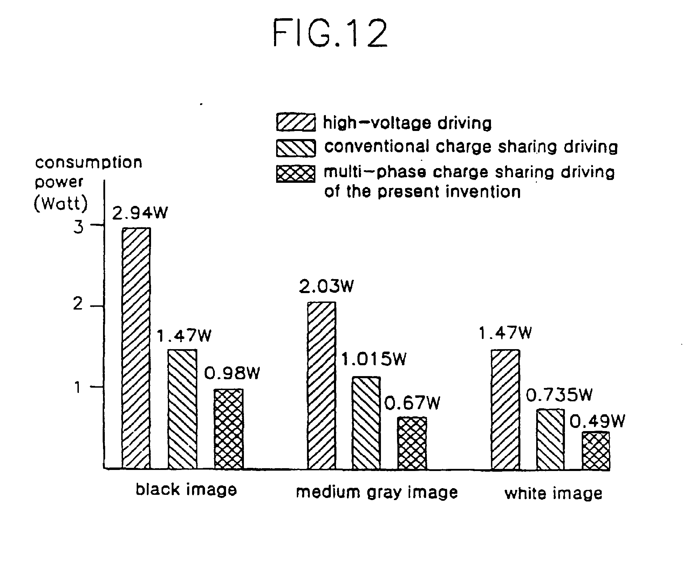

Accordingly, the consumption power reduction efficiency which can be obtained by the multi-phase charge sharing of the present invention is proportional to the magnitude of the switches, the magnitude of the external capacitor and charge sharing time, and results in 66.6% even under the influence of RC time constants of the loads. FIG. 12 is a graph showing the consumption power when an SXGA class TFT-LCD is driven according to the present invention. From this graph, it is observed that the driving consumption power of the present invention is reduced to one-third of the conventional one without regard to video images.

As described above, the circuit driving a TFT-LCD using multi-phase charge sharing according to the present invention has the following advantages. First of all, the TFT-LCD driving circuit shares the charges of the source lines during the period of multi-phase charge sharing time, to thereby reduce the driving power consumption of the liquid crystal panel to one-third of the conventional one. Secondly, the TFT-LCD driving circuit of the present invention generates less heat due to reduction in its consumption power. Thus, deterioration in characteristics of the liquid crystal and TFT caused by heat is decreased in case where the TFT-LCD is configured of a polysilicon TFT.

Thirdly, the high-resolution TFT-LCD according to the present invention uses at least one line switching element to solve reliability problem between the source lines due to addition of source drivers, realizing a low-power liquid crystal display. Moreover, in the TFT-LCD using multi-phase charge sharing according to the present invention, the switching section of the source driver can be configured of a variety of switching elements.

It will be apparent to those skilled in the art that various modifications and variations can be made in the TFT-LCD using multi-phase charge sharing of the present invention without departing from the scope of the invention as defined by the appended claims.

**Claims**

1. A method of driving a TFT-LCD using multi-phase charge sharing between even numbered source lines that have been discharged to a voltage $V_L$ during a previous period of an (N-1) th gradation expressing time and odd numbered source lines that have been charged to a voltage $V_H$ during the period of (N-1)th gradation expressing time, with $V_H$ being larger than $V_L$ wherein said even numbered source lines and said odd numbered source lines each have a source line capacitance, at least one selection signal being applied to an arrangement of switching elements in the method of driving the TFT-LCD for a period of multi-phase charge sharing time, the method comprising:

a first charge sharing step in which a second selection signal is applied and in which the even-numbered/source line capacitances are charged with the voltage of a capacitor (500), said voltage of the capacitor being $V_L+(1/3)V_{swing}$, wherein $V_{swing}$ is the difference between $V_H$ and $V_L$ and in the first charge sharing step the odd numbered source line capacitors are maintained at the voltage $V_H$

a subsequent second charge sharing step in which a third selection signal is applied and in which the odd-numbered source line capacitances are discharged from $V_H$ to a voltage $V_L+(2/3)V_{swing}$ through charge sharing with the even-numbered source line capacitances that have been charged to $V_L+(1/3)V_{swing}$ by the first charge sharing step; and

a subsequent third charge sharing step in which a first selection signal is applied and in which the odd-numbered source line capacitances, which should be discharged to $V_L$ during a next period of the Nth gradation expressing time, are discharged to the voltage of the capacitor (500), $V_L+(1/3)Vswing$.

2. A method according to claim 1, wherein, in the first charge sharing step, a first switching section (430) is turned on according to the second selection signal, the even-numbered source line capacitances thereby charging with the voltage of the capacitor (500), $V_L+(1/3)V_{swing}$.

3. A method according to claim 1 or 2, wherein, in the second charge sharing step, a third switching section (440) is turned on according to the third selection signal, thereby allowing all of the capacitive loads to have a voltage, $V_L+(2/3)V_{swing}$, higher than $V_L+(1/2)V_{swing}$.

4. A method according to claim 1, 2 or 3, wherein, in the third charge sharing step, a second switching section (410) is turned on according to the first selection signal, thereby discharing the odd-numbered source line capacitances to $V_L+(1/3)Vswing$.

5. A TFT-LCD using multi-phase charge sharing, comprising:

a source driver (300) for outputting video data signals each of which corresponds to one pixel through a plurality of source lines, each source line having a source line capacitance; an arrangement of switching elements (400) for mutf-phase charge sharing; and

a capacitor (500), connectable between a liquid crystal panel (100) and the source driver (300), for collecting charges of a source line having a voltage higher than a common electrode voltage and supplying them to a source line having a voltage lower than the common electrode voltage when the source lines are connected thereto:

the TFT-LCD being arranged to provide first, second and third selection signals to the switching elements during a current capacitive load driving period, wherein:

the switching elements are arranged to connect, upon application of the second selection signal in a first charge sharing step, even-numbered source line capacitances, which in use have been discharged to a voltage $V_L$ prior to the current capacitive load driving period, to the capacitor (500) to charge the even-numbered source line capacitances to the voltage of the for (500), wherein

the voltage of the capacitor is $V_L+(1/3)V_{swing}$. $V_{swing}$ being the difference between $V_L$ and a voltage $V_H$ to which the odd-numbered source line capacitances have been charged prior to the current capacitive load driving period, $V_H$ being larger than $V_L$:

the TFT-LCD is arranged to maintain the odd-numbered source line capacitances at the voltage $V_H$ during the first charge sharing step; and

the switching elements are arranged to connect, upon application of the third selection signal in a second charge sharing step subsequent to the first charge sharing step, the even-numbered source line capacitances to the odd-numbered source line capacitances to allow discharging of the odd-numbered source line capacitances from $V_H$ to $V_L+(2/3)V_{swing}$, and

to connect the odd-numbered source line capacitances to the capacitor (500), upon application of the first selection signal a third charge sharing step subsequent to the second charge sharing step, to discharge the odd-numbered source line capacitances, which should be discharged to $V_L$ during a next capacitive load driving period, from $V_L+(2/3)V_{swing}$ to the voltage of the capacitor, $V_L+(1/3)V_{swing}$.

**6.** A TFT-LCD according to claim 5, wherein the arrangement of switching elements comprises:

a transfer gate section (410) for connecting each of the source lines of the liquid crystal panel (100) to the source driver (300) according to a driving signal;

first (420) and second (430) switching sections for connecting each source line of the liquid crystal panel (100) to the capacitor (500) according to the first and third selection signals, respectively: and

a third switching section (440) for connecting source lines which are adjacent in the liquid crystal panel (100) to one another according to the second selection signal.

**7.** A TFT-LCD according to claim 5 or 6, wherein the source driver (300) includes a line driver for supplying video signals through each source line to pixels.

**8.** A TFT-LCD according to claim 7, wherein the arrangement of switching elements (400) comprises one of a transfer gate, PMOS transistor and NMOS transistor.

**9.** A TFT-LCD according to claim 7, wherein the arrangement of switching elements (400) includes a transfer gate section for setting the output terminals of the source driver in a high impedance state.

**10.** A TFT-LCD according to any of claims 6 to 9 , wherein the third switching section (440) consists of switching elements each of which is connected between two adjacent source lines so that between each pair of adjacent source lines a switching element is provided.

**11.** A TFT-LCD according to any of claims 6 to 9, wherein the third switching section (440) consists of switching elements each of which is connected between the (2N-1)th and 2Nth source lines but not between the 2Nth and (2N+1)th source lines.

**Patentansprüche**

**1.** Verfahren zum Ansteuern eines TFT-LCDs unter Verwendung von Mehrphasen-Ladungsteilung zwischen gerade nummerierten Source-Leitungen, die während einer vorangegangenen Periode einer (N-1)-ten Gradationsausdruckszeit auf eine Spannung $V_L$ entladen worden sind, und ungerade nummerierten Source-Leitungen, die während der Periode der (N-1)-ten Gradationsausdruckszeit auf eine Spannung $V_H$ geladen worden sind, wobei $V_H$ größer als $V_L$ ist, wobei die gerade nummerierten Source-Leitungen und die ungerade nummerierten Source-Leitungen jeweils eine Source-Leitungskapazität haben, wobei in dem Verfahren zum Ansteuern des TFT-LCDs für eine Periode der Mehrphasen-Ladungsteilungszeit mindestens ein Auswahlsignal an eine Anordnung von Schaltelementen angelegt wird, wobei das Verfahren umfasst:

einen ersten Ladungsteilungsschritt, in dem ein zweites Auswahlsignal angelegt wird und in dem die gerade nummerierten Source-Leitungskapazitäten mit der Spannung eines Kondensators (500) geladen werden, wobei die Spannung des Kondensators $V_L$ + (1/3)$V_{swing}$ ist, wobei $V_{swing}$ die Differenz zwischen $V_H$ und $V_L$ ist, und wobei im ersten Ladungsteilungsschritt die ungerade nummerierten Source-Leitungskapazitäten auf der Spannung $V_H$ gehalten werden;

einen anschließenden zweiten Ladungsteilungsschritt, in dem ein drittes Auswahlsignal angelegt wird und in dem die ungerade nummerierten Source-Leitungskapazitäten von $V_H$ auf eine Spannung $V_L$ + (2/3)$V_{swing}$ entladen werden, und zwar durch Ladungsteilung mit den gerade nummerierten Source-Leitungskapazitäten, die durch den ersten Ladungsteilungsschritt auf $V_L$ + (1/3)$V_{swing}$ geladen worden sind; und

einen anschließenden dritten Ladungsteilungsschritt, in dem ein erstes Auswahlsignal angelegt wird und in dem die ungerade nummerierten Source-Leitungskapazitäten, die während einer nächsten Periode der N-ten Gradationsausdruckszeit auf $V_L$ entladen werden sollen, auf die Spannung des Kondensators (500), $V_L$ + (1/3)$V_{swing}$, entladen werden.

**2.** Verfahren nach Anspruch 1, wobei im ersten Ladungsteilungsschritt ein erster Schaltabschnitt (430) gemäß dem zweiten Auswahlsignal eingeschaltet wird, wodurch die gerade nummerierten Source-Leitungskapazitäten mit der Spannung des Kondensators (500), $V_L$ + (1/3)$V_{swing}$, geladen werden.

**3.** Verfahren nach Anspruch 1 oder 2, wobei im zweiten Ladungsteilungsschritt ein dritter Schaltabschnitt (440) gemäß dem dritten Auswahlsignal eingeschaltet wird, wodurch ermöglicht wird, dass alle kapazitiven Lasten eine Spannung

$V_L + (2/3)V_{swing}$ haben, die höher als $V_L + (1/2)V_{swing}$ ist.

4. Verfahren nach Anspruch 1, 2 oder 3, wobei im dritten Ladungsteilungsschritt ein zweiter Schaftabschnitt (410) gemäß dem ersten Auswahlsignal eingeschaltet wird, wodurch die ungerade nummerierten Source-Leitungskapazitäten auf $V_L + (1/3)V_{swing}$ entladen werden.

5. TFT-LCD, das Mehrphasen-Ladungsteilung verwendet, umfassend:

   einen Source-Treiber (300) zum Ausgeben von Videodatensignalen, von denen jedes einem Bildpunkt entspricht, über eine Vielzahl von Source-Leitungen, wobei jede Source-Leitung eine Source-Leitungskapazität hat, eine Anordnung von Schaltelementen (400) zur Mehrphasen-Ladungsteilung; und
   einen Kondensator (500), der zwischen einen Flüssigkristallbildschirm (100) und den Source-Treiber (300) geschaltet werden kann, um Ladungen einer Source-Leitung, die eine höhere Spannung als eine gemeinsame Elektrodenspannung hat, zu sammeln und sie an eine Source-Leitung zu übergeben, die eine niedrigere Spannung als die gemeinsame Elektrodenspannung hat, wenn die Source-Leitungen damit verbunden werden;
   wobei das TFT-LCD dafür eingerichtet ist, während einer aktuellen Ansteuerungsperiode der kapazitiven Lasten erste, zweite und dritte Auswahlsignale an die Schaltelemente zu übergeben, wobei:

   die Schaltelemente dafür eingerichtet sind, bei Anlegen des zweiten Auswahlsignals in einem ersten Ladungsteilungsschritt gerade nummerierte Source-Leitungskapazitäten, die in Gebrauch vor der aktuellen Ansteuerungsperiode der kapazitiven Lasten auf eine Spannung $V_L$ entladen worden sind, mit dem Kondensator (500) zu verbinden, um die gerade nummerierten Source-Leitungskapazitäten auf die Spannung des Kondensators (500) zu laden, wobei die Spannung des Kondensators $V_L + (1/3)V_{swing}$ ist, wobei $V_{swing}$ die Differenz zwischen $V_L$ und einer Spannung $V_H$ ist, bis zu der die ungerade nummerierten Source-Leitungskapazitäten vor der aktuellen Ansteuerungsperiode der kapazitiven Lasten geladen worden sind, wobei $V_H$ größer als $V_L$ ist;
   wobei das TFT-LCD dafür eingerichtet ist, die gerade nummerierten Source-Leitungskapazitäten während des ersten Ladungsteilungsschritts auf der Spannung $V_H$ zu halten; und
   die Schaltelemente dafür eingerichtet sind, bei Anlegen des dritten Auswahlsignals in einem zweiten Ladungsteilungsschritt, der auf den ersten Ladungsteilungsschritt folgt, die gerade nummerierten Source-Leitungskapazitäten mit den ungerade nummerierten Source-Leitungskapazitäten zu verbinden, um zu ermöglichen, dass die ungerade numerierten Source-Leitungskapazitäten von $V_H$ auf $V_L + (2/3)V_{swing}$ entladen werden, und
   bei Anlegen des ersten Auswahlsignals in einem dritten Ladungsteilungsschritt, der auf den zweiten Ladungsteilungsschritt folgt, die ungerade nummerierten Source-Leitungskapazitäten mit dem Kondensator (500) zu verbinden, um die ungerade nummerierten Source-Leitungskapazitäten, die während einer nächsten aktuellen Ansteuerungsperiode der kapazitiven Lasten auf $V_L$ entladen werden sollen, von $V_L + (2/3)V_{swing}$ auf die Spannung des Kondensators, $V_L + (1/3)V_{swing}$, zu entladen.

6. TFT-LCD nach Anspruch 5, wobei die Anordnung der Schaltelemente umfasst:

   einen Transfergate-Abschnitt (410) zum Verbinden jeder der Source-Leitungen des Flüssigkristallbildschirms (100) mit dem Source-Treiber (300) gemäß einem Ansteuersignal;
   erste (420) und zweite (430) Schaltabschnitte zum Verbinden jeder Source-Leitung des Flüssigkristallbildschirms (100) mit dem Kondensator (500) gemäß dem ersten bzw. dritten Auswahlsignal; und
   einen dritten Schaltabschnitt (440), um Source-Leitungen, die in dem Flüssigkristallbildschirm (100) benachbart sind, gemäß dem zweiten Auswahlsignal miteinander zu verbinden.

7. TFT-LCD nach Anspruch 5 oder 6, wobei der Source-Treiber (300) einen Leitungstreiber zum Übergeben von Videosignalen über jede Source-Leitung an Bildpunkte aufweist.

8. TFT-LCD nach Anspruch 7, wobei die Anordnung von Schaltelementen (400) eines der folgenden umfasst: ein Transfergate, einen PMOS-Transistor und einen NMOS-Transistor.

9. TFT-LCD nach Anspruch 7, wobei die Anordnung von Schaltelementen (400) einen Transfergate-Abschnitt aufweist, um die Ausgangsanschlüsse des Source-Treibers in einen Zustand hoher Impedanz zu versetzen.

10. TFT-LCD nach einem der Ansprüche 6 bis 9, wobei der dritte Schaltabschnitt (440) aus Schaltelementen besteht, von denen jedes zwischen zwei benachbarte Source-Leitungen geschaltet ist, so dass zwischen jedem Paar von benachbarten Source-Leitungen ein Schaltelement ausgebildet ist.

11. TFT-LCD nach einem der Ansprüche 6 bis 9, wobei der dritte Schaltabschnitt (440) aus Schaltelementen besteht, von denen jedes zwischen die (2N-1)-ten und 2N-ten Source-Leitungen geschaltet ist, aber nicht zwischen die 2N-ten und (2N+1)-ten Source-Leitungen.

**Revendications**

1. Procédé de commande d'un dispositif d'affichage à cristaux liquides à transistor à couche mince (TFT-LCD) utilisant un partage de charge multi-phase entre des lignes de source de nombre pair qui ont été déchargées à une tension $V_L$ pendant une période précédente d'un $(N-1)^{ième}$ temps d'expression de gradation et des lignes de source de nombre impair qui ont été chargées à une tension $V_H$ pendant la période d'un $(N-1)^{ième}$ temps d'expression de gradation, avec $V_H$ étant plus grand que $V_L$, où lesdites lignes de source de nombre pair et lesdites lignes de source de nombre impair ont chacune une capacitance de ligne de source, au moins un signal de sélection étant appliqué à un arrangement d'éléments de commutation dans le procédé de commande du TFT-LCD pendant une période de temps de partage de charge multi-phase, le procédé comprenant :

une première étape de partage de charge, dans laquelle un deuxième signal de sélection est appliqué et dans laquelle les capacitances de ligne de source de nombre pair sont chargées avec la tension d'un condensateur (500), ladite tension du condensateur étant $V_L+(1/3)V_{swing}$, où $V_{swing}$ est la différence entre $V_H$ et $V_L$ et, dans la première étape de partage de charge, les condensateurs de ligne de source de nombre impair sont maintenus à la tension $V_H$ ;

une deuxième étape de partage de charge subséquente dans laquelle un troisième signal de sélection est appliqué et dans laquelle les capacitances des lignes de source de nombre impair sont déchargées d'une tension $V_H$ à une tension $V_{L+}(2/3)V_{swing}$ via un partage de charge avec les capacitances des lignes de source de nombre pair qui ont été chargées à une tension $V_L +(1/3)V_{swing}$ par la première étape de partage de charge ; et

une troisième étape de partage de charge subséquente dans laquelle un premier signal de sélection est appliqué et dans laquelle les capacitances des lignes de source de nombre impair, qui doivent être déchargées à une tension $V_L$ lors d'une période suivante du $N^{ième}$ temps d'expression de gradation, sont déchargées à la tension du condensateur (500), $VL-(1/3)V_{swing}$.

2. Procédé selon la revendication 1, dans lequel, dans la première étape de partage de charge, une première section de commutation (430) est activée conformément au deuxième signal de sélection, les capacitances des lignes de source de nombre pair se chargeant par ce moyen avec la tension du condensateur (500), $V_L+(1/3)V_{swing}$.

3. Procédé selon la revendication 1 ou la revendication 2, dans lequel, dans la deuxième étape de partage de charge, une troisième section de commutation (440) est activée conformément au troisième signal de sélection, permettant par ce moyen à toutes les charges capacitives d'avoir une tension de $V_L+(2/3)V_{swing}$, supérieure à $V_L+(1/2)V_{swing}$.

4. Procédé selon les revendications 1, 2 ou 3, dans lequel, dans la troisième étape de partage de charge, une deuxième section de commutation (410) est activée conformément au premier signal de sélection, déchargeant par ce moyen les capacitances des lignes de source de nombre impair à $V_L+(1/3)V_{swing}$,

5. Dispositif d'affichage à cristaux liquides à transistor à couche mince (TFT-LCD) utilisant un partage de charge multi-phase, comprenant :

un circuit d'attaque de source (300) pour délivrer en sortie des signaux de données vidéo, chacun d'eux correspondant à un pixel, à travers une pluralité de lignes de source, chaque ligne de source ayant une capacitance de ligne de source ;
un arrangement d'éléments de commutation (400) pour un partage de charge multi-phase ; et
un condensateur (500) qui peut être connecté entre un panneau à cristaux liquides (100) et le circuit d'attaque de source (300), pour collecter des charges d'une ligne de source ayant une tension supérieure à une tension d'électrode commune et les transmettre à une ligne de source ayant une tension inférieure à la tension d'électrode commune lorsque les lignes de source y sont connectées ;
le dispositif d'affichage à cristaux liquides à transistor à couche mince (TFT-LCD) étant arrangé pour délivrer des premier, deuxième et troisième signaux de sélection aux éléments de commutation au cours d'une période de commande de charge capacitive courante, où :

les éléments de commutation sont arrangés pour connecter, lors de l'application du deuxième signal de sélection dans une première étape de partage de charge, des capacitances de ligne de source de nombre pair, qui, à l'usage, ont été déchargées à une tension $V_L$ avant la période de commande de charge capacitive courante, au condensateur (500) pour charger les capacitances de ligne de source de nombre pair à la tension du condensateur (500), où la tension du condensateur est $V_L +(1/3)V_{swing}$, étant la différence entre $V_L$ et une tension $V_H$ à laquelle les capacitances de ligne de source de nombre impair ont été chargées avant la période de commande de charge capacitive courante, $V_H$ étant plus élevée que $V_L$ ;

le dispositif d'affichage à cristaux liquides à transistor à couche mince (TFT-LCD) est arrangé pour maintenir les capacitances des lignes de source de nombre impair à la tension $V_H$ pendant la première étape de partage de charge ; et

les éléments de commutation sont arrangés pour connecter, lors de l'application du troisième signal de sélection dans une deuxième étape de partage de charge subséquente à la première étape de partage de charge, les capacitances de ligne de source de nombre pair aux capacitances de ligne de source de nombre impair pour permettre le déchargement des capacitances de ligne de source de nombre impair de $V_H$ à $V_L+(2/3)V_{swing}$, et

pour connecter les capacitances de ligne de source de nombre impair au condensateur (500) lors de l'application du premier signal de sélection dans une troisième étape de partage de charge subséquente à la deuxième étape de partage de charge, pour décharger les capacitances de ligne de source de nombre impair, qui doivent être déchargées à la tension $V_L$ au cours d'une période de commande de charge capacitive suivante, de $V_L+(2/3)V_{swing}$ à la tension du condensateur $V_L+(1/3)V_{swing}$.

6. Dispositif d'affichage à cristaux liquides à transistor à couche mince (TFT-LCD) selon la revendication 5, dans lequel l'arrangement d'éléments de commutation comprend :

une section de porte de transfert (410) pour connecter chacune des lignes de source du panneau à cristaux liquides (100) au circuit d'attaque de source (300) conformément à un signal de commande ;

des première (420) et deuxième (430) sections de commutation pour connecteur chaque ligne de source du panneau de cristaux liquides (100) au condensateur (500) conformément à des premier et troisième signaux de sélection, respectivement ; et

une troisième section de commutation (440) pour connecter des lignes de source qui sont adjacentes entre elles dans le panneau de cristaux liquides (100) conformément au deuxième signal de sélection.

7. Dispositif d'affichage à cristaux liquides à transistor à couche mince (TFT-LCD) selon la revendication 5 ou la revendication 6, dans lequel le circuit d'attaque de source (300) comprend un circuit d'attaque de ligne pour délivrer, à des pixels, des signaux vidéo à travers chaque ligne de source.

8. Dispositif d'affichage à cristaux liquides à transistor à couche mince (TFT-LCD) selon la revendication 7, dans lequel l'arrangement d'éléments de commutation (400) comprend une porte de transfert, un transistor PMOS et un transistors NMOS.

9. Dispositif d'affichage à cristaux liquides à transistor à couche mince (TFT-LCD) selon la revendication 7, dans lequel l'arrangement d'éléments de commutation (400) comprend une section de porte de transfert pour placer les bornes de sortie du circuit d'attaque de source dans un état d'impédance élevée.

10. Dispositif d'affichage à cristaux liquides à transistor à couche mince (TFT-LCD) selon l'une quelconque des revendications 6 à 9, dans lequel la troisième section de commutation (440) consiste en des éléments de commutation, chacun d'eux étant connecté entre deux lignes adjacentes de manière à ce qu'un élément de commutation soit pourvu entre chaque paire de lignes de source adjacentes.

11. Dispositif d'affichage à cristaux liquides à transistor à couche mince (TFT-LCD) selon l'une quelconque des revendications 6 à 9, dans lequel la troisième section de commutation (440) consiste en des éléments de commutation, chacun d'eux étant connecté entre la (2N-1)$^{ième}$ ligne de source et la 2N$^{ième}$ ligne de source, mais non entre les 2N$^{ième}$ et (2N+1)$^{ième}$ lignes de source.

FIG.1

source driver — 20

30

gate
dri-
ver

SL

GL

Cs    Cls

10

EP 1 058 231 B1

# FIG.2

VDD ————————————————————————

positive video
signal

VCOM ————————————————————————

negative video
signal

VSS ————————————————————————

# FIG.3A

odd−numbered
frame

even−numbered
frame

| | DL#1 | DL#2 | DL#3 | DL#4 |
|---|---|---|---|---|
| GL#1 | + | + | + | + |
| GL#2 | + | + | + | + |
| GL#3 | + | + | + | + |
| GL#4 | + | + | + | + |

| | DL#1 | DL#2 | DL#3 | DL#4 |
|---|---|---|---|---|
| | − | − | − | − |
| | − | − | − | − |
| | − | − | − | − |
| | − | − | − | − |

+ positive video
signal

− negative video
signal

# FIG.3B

odd−numbered
frame

even−numbered
frame

| | DL#1 | DL#2 | DL#3 | DL#4 |
|---|---|---|---|---|
| GL#1 | + | + | + | + |
| GL#2 | − | − | − | − |
| GL#3 | + | + | + | + |
| GL#4 | − | − | − | − |

| | DL#1 | DL#2 | DL#3 | DL#4 |
|---|---|---|---|---|
| | − | − | − | − |
| | + | + | + | + |
| | − | − | − | − |
| | + | + | + | + |

+ positive video
signal

− negative video
signal

# FIG.3C

### odd—numbered frame

|      | DL#1 | DL#2 | DL#3 | DL#4 |
|------|------|------|------|------|
| GL#1 | +    | \|   | +    | \|   |
| GL#2 | +    | \|   | +    | \|   |
| GL#3 | +    | \|   | +    | \|   |
| GL#4 | +    | \|   | +    | \|   |

+ positive video signal

### even—numbered frame

|      | DL#1 | DL#2 | DL#3 | DL#4 |
|------|------|------|------|------|
| GL#1 | \|   | +    | \|   | +    |
| GL#2 | \|   | +    | \|   | +    |
| GL#3 | \|   | +    | \|   | +    |
| GL#4 | \|   | +    | \|   | +    |

— negative video signal

# FIG.3D

### odd—numbered frame

|      | DL#1 | DL#2 | DL#3 | DL#4 |
|------|------|------|------|------|
| GL#1 | +    | —    | +    | —    |
| GL#2 | —    | +    | —    | +    |
| GL#3 | +    | —    | +    | —    |
| GL#4 | —    | +    | —    | +    |

+ positive video signal

### even—numbered frame

|      | DL#1 | DL#2 | DL#3 | DL#4 |
|------|------|------|------|------|
| GL#1 | —    | +    | —    | +    |
| GL#2 | +    | —    | +    | —    |
| GL#3 | —    | +    | —    | +    |
| GL#4 | +    | —    | +    | —    |

— negative video signal

# FIG.4

EP 1 058 231 B1

# FIG.5

EP 1 058 231 B1

FIG.6

# FIG.7

EP 1 058 231 B1

# FIG.8

EP 1 058 231 B1

# FIG.9

VDD ――――――――――――――――――

2.5V      polarity(+)

1.5V

VCOM ―― white ―― medium gray ―― black ――

1.5V

2.5V      polarity(−)

VSS ――――――――――――――――――

# FIG.10A

# FIG.10B

# FIG.10C

# FIG.11

# FIG.12

consumption power (Watt)

Legend:
- ▨ high-voltage driving
- ▧ conventional charge sharing driving
- ▩ multi-phase charge sharing driving of the present invention

black image: 2.94W, 1.47W, 0.98W

medium gray image: 2.03W, 1.015W, 0.67W

white image: 1.47W, 0.735W, 0.49W

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9912072 A
- US 5528256 A
- GB 2324191 A